# EUROPÄISCHE PATENTSCHRIFT

(11) **EP 1 307 650 B1**
(45) Veröffentlichungstag und Bekanntmachung des Hinweises auf die Patenterteilung: **28.12.2005**
(21) Anmeldenummer: 01962570.6
(22) Anmeldetag: 19.07.2001
(51) Int. Cl.: F02M 61/16

(54) **BRENNSTOFFEINSPRITZVENTIL**
FUEL INJECTION VALVE
SOUPAPE D'INJECTION DE CARBURANT

(30) Priorität: 04.08.2000 DE 10038098
(43) Veröffentlichungstag der Anmeldung: 07.05.2003
(73) Patentinhaber: ROBERT BOSCH GMBH, 70442 Stuttgart (DE)
(72) Erfinder: MAIER, Martin, 71696 Moeglingen (DE); HEYSE, Joerg, 74354 Besigheim (DE)
(86) Internationale Anmeldenummer: PCT/DE2001/002710
(87) Internationale Veröffentlichungsnummer: WO 2002/012719

(56) Entgegenhaltungen:
- DE-C- 4 200 710
- GB-A- 2 232 203
- US-A- 6 045 063
- PATENT ABSTRACTS OF JAPAN vol. 1996, no. 07, 31. Juli 1996 (1996-07-31) & JP 08 061189 A (TOYOTA MOTOR CORP), 5. März 1996 (1996-03-05)

## Beschreibung

### Stand der Technik

Die Erfindung geht aus von einem Brennstoffeinspritzventil nach der Gattung des Hauptanspruchs.

Bei motorischem Betrieb tritt allgemein bei der Direkteinspritzung eines Brennstoffs in den Brennraum einer Brennkraftmaschine, insbesondere bei der Benzindirekteinspritzung bzw. der Einspritzung von DieselKraftstoff, das Problem auf, dass die in den Brennraum ragende stromabwärtige Spitze des Einspritzventils durch Brennstoffablagerungen verkokt bzw. sich in der Flammenfront gebildete Rußpartikel an der Ventilspitze anlagern. Bei bisher bekannten in den Brennraum ragenden Einspritzventilen besteht deshalb über ihre Lebensdauer die Gefahr einer negativen Beeinflussung der Sprayparameter (z.B. statische Strömungsmenge, Strahlwinkel, Tröpfchengröße, Strähnigkeit), die zu Laufstörungen der Brennkraftmaschine bzw. bis zu einem Ausfall des Einspritzventils führen kann.

### Vorteile der Erfindung

Das erfindungsgemäße Brennstoffeinspritzventil mit den kennzeichnenden Merkmalen des Hauptanspruchs hat den Vorteil, dass diese vorgenannten negativen Effekte der Verkokung (Rußablagerung) besonders an der in den Brennraum ragenden Ventilspitze mit ihren Austrittsöffnungen eingeschränkt bzw. beseitigt sind. Durch das erfindungsgemäße Ausbilden einer rauen Oberflächenstruktur zur Speicherung von Brennraumgas mit Zugang zu dem zwischen Ventilnadelende und die Austrittsöffnungen umfassendem Abspritzbereich gelegenen Totvolumen können Verkokungsablagerungen in den Austrittsöffnungen weitgehend verhindert werden. Durch den Auftrieb der Gasphase gegenüber der Flüssigkeitsphase und die große Oberflächenspannung verbleibt das Gas in den Poren der rauen Oberflächenstruktur zur Speicherung von Brennraumgas.

Auf diese Weise können die Sprayparameter und die Ventilfunktion auch bei direkter Einspritzung von Brennstoff in einen Brennraum an den Brennstoffeinspritzventilen über ihre lange Lebensdauer stabil aufrechterhalten werden.

Durch die in den Unteransprüchen aufgeführten Maßnahmen sind vorteilhafte Weiterbildungen und Verbesserungen des im Hauptanspruch angegebenen Brennstoffeinspritzventils möglich.

Von Vorteil ist es, die raue, poröse Oberflächenstruktur am den Austrittsöffnungen zugewandten Ventilnadelende bzw. am Ventilschließkörper an dessen dem Totvolumen zugewandter Oberfläche vorzusehen. In vorteilhafter Weise ist die Oberflächenstruktur mittels Anrauen (Senkerodieren, Anätzen, Anschleifen mit grober Körnung, Einbringen von Drehriefen oder -rillen u.ä.) oder durch Sintern des entsprechenden Bauteils herstellbar.

Von Vorteil ist es zudem, dass die Gas speichernden Poren der rauen Oberfläche auch als Dampfbildungskeime dienen, so dass bei Unterschreitung des Dampfdrucks in den Poren Dampfblasen des Brennstoffs gebildet werden.

### Zeichnung

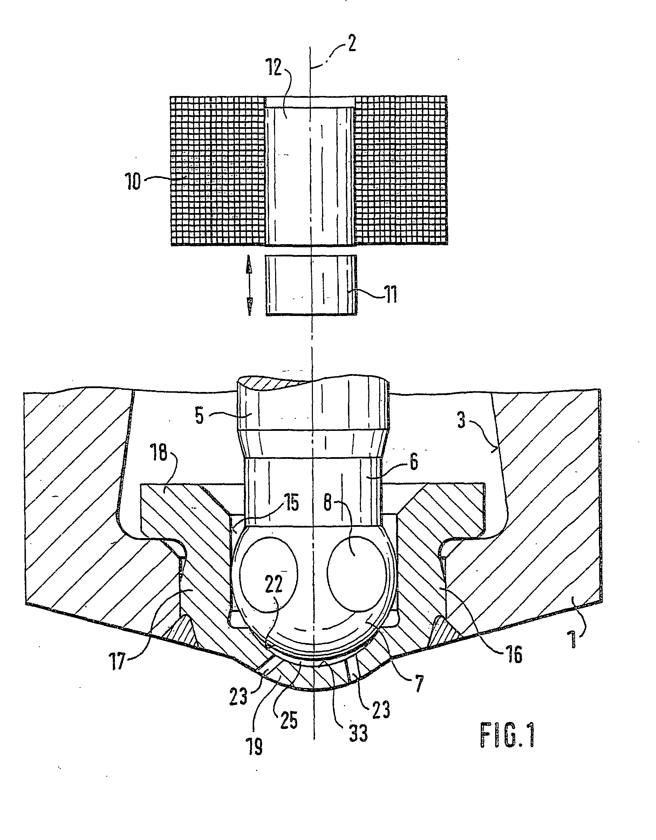

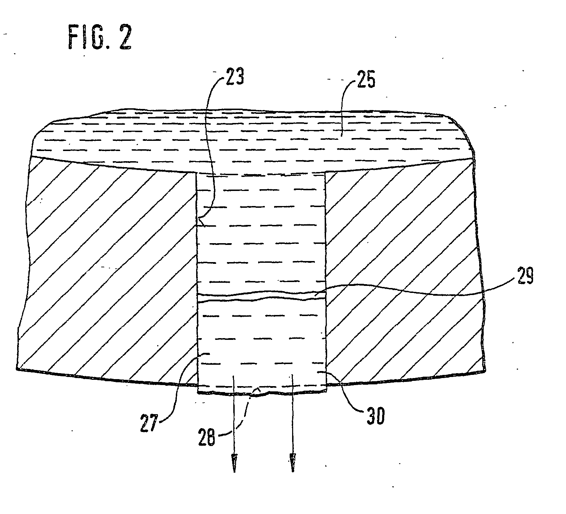

Ein Ausführungsbeispiel der Erfindung ist in der Zeichnung vereinfacht dargestellt und in der nachfolgenden Beschreibung näher erläutert. Es zeigen Figur 1 ein teilweise dargestelltes Brennstoffeinspritzventil und Figur 2 einen schematischen Schnitt durch eine Austrittsöffnung mit einer darin stehenden und abreißenden Flüssigkeitssäule.

### Beschreibung der Ausführungsbeispiele

In der Figur 1 ist als ein Ausführungsbeispiel ein Ventil in der Form eines Einspritzventils für Brennstoffeinspritzanlagen von gemischverdichtenden fremdgezündeten Brennkraftmaschinen teilweise dargestellt. Das Einspritzventil hat einen rohr-förmigen Ventilsitzträger 1, in dem konzentrisch zu einer Ventillängsachse 2 eine Längsöffnung 3 ausgebildet ist. In der Längsöffnung 3 ist eine z. B. rohrförmige Ventilnadel 5 angeordnet, die an ihrem stromabwärtigen Ende 6 mit einem z. B. kugelförmigen Ventilschließkörper 7, an dessen Umfang beispielsweise fünf Abflachungen 8 zum Vorbeiströmen des Brennstoffs vorgesehen sind, fest verbunden ist.

Die Betätigung des Einspritzventils erfolgt in bekannter Weise, beispielsweise elektromagnetisch. Zur axialen Bewegung der Ventilnadel 5 und damit zum Öffnen entgegen der Federkraft einer nicht dargestellten Rückstellfeder bzw. Schließen des Einspritzventils dient ein schematisch angedeuteter elektromagnetischer Kreis mit einer Magnetspule 10, einem Anker 11 und einem Kern 12. Der Anker 11 ist mit dem dem Ventilschließkörper 7 abgewandten Ende der Ventilnadel 5 durch z. B. eine mittels eines Lasers ausgebildete Schweißnaht verbunden und auf den Kern 12 ausgerichtet.

Zur Führung des Ventilschließkörpers 7 während der Axialbewegung dient eine Führungsöffnung 15 eines Ventilsitzkörpers 16, der in das stromabwärts liegende, dem Kern 12 abgewandte Ende des Ventilsitzträgers 1 in der konzentrisch zur Ventillängsachse 2 verlaufenden Längsöffnung 3 durch Schweißen dicht montiert ist. Der Ventilsitzkörper 16 ist beispielsweise becherförmig ausgeführt, wobei ein Mantelteil 17 des Ventilsitzkörpers 16 in Richtung zum Anker 11 hin in einen an dem Ventilsitzträger 1 anliegenden Kragen 18 übergeht. Auf der dem Kragen 18 gegenüberliegenden Seite weist der Ventilsitzkörper 16 ein Bodenteil 19 auf, das z.B. konvex gewölbt ist.

Die Einschubtiefe des Ventilsitzkörpers 16 bestimmt die Größe des Hubs der Ventilnadel 5, da die eine Endstellung der Ventilnadel 5 bei nicht erregter Magnetspule 10 durch die Anlage des Ventilschließkörpers 7 an einer sich stromabwärts konisch verjüngenden bzw. geringfügig gewölbt ausgebildeten Ventilsitzfläche 22 am Bodenteil 19 des Ventilsitzkörpers 16 festgelegt ist. Die andere Endstellung der Ventilnadel 5 wird bei erregter Magnetspule 10 beispielsweise durch die Anlage des Ankers 11 an dem Kern 12 festgelegt. Der Weg zwischen diesen beiden Endstellungen der Ventilnadel 5 stellt somit den Hub dar. Der kugelförmige Ventilschließkörper 7 wirkt mit der kegelstumpfförmigen bzw. gewölbten Ventilsitzfläche 22 des Ventilsitzkörpers 16 zusammen, die zwischen der Führungsöffnung 15 und mehreren in einem zentralen Bereich des Bodenteils 19 des Ventilsitzkörpers 16 eingebrachten Austrittsöffnungen 23 ausgebildet ist. Das Bodenteil 19 bildet den Abspritzbereich des Brennstoffeinspritzventils.

Das Brennstoffeinspritzventil ist insbesondere als sogenanntes Mehrlochventil ausgeführt, das sich insbesondere zum direkten Einspritzen von Brennstoff in einen nicht dargestellten Brennraum eignet. Dabei sind in dem Bodenteil 19 des Ventilsitzkörpers 16 wenigstens zwei, aber auch vier oder noch deutlich mehr Austrittsöffnungen 23 z.B. mittels Erodieren, Laserbohren oder Stanzen eingebracht. Für eine gewünschte Ausfüllung des Brennraums mit Brennstoff sind die Austrittsöffnungen- 23 beispielsweise mit unterschiedlichen Winkeln zur Ventillängsachse 2 ausgerichtet, wobei sich z.B. alle Austrittsöffnungen 23 in stromabwärtiger Richtung unter einem Winkel von der Ventillängsachse 2 entfernen.

Insbesondere derartige Mehrlochventile für die Direkteinspritzung von Brennstoff in einen Brennraum, deren Austrittsöffnungen direkt der Brennraumatmosphäre ausgesetzt sind, sind stark verkokungsanfällig. Im ungünstigen Fall können solche Austrittsöffnungen an ihrem Umfang durch Verkokungsanlagerungen zuwachsen, wodurch die gewünschten Einspritzmengen nicht mehr in zulässigem Maße dosiert und zugemessen werden können.

Mit dem erfindungsgemäßen Brennstoffeinspritzventil soll in hohem Maße vermieden werden, dass Verkokungsablagerungen des Brennraums im Bereich der Austrittsöffnungen 23 diese zusetzen und so die Einspritzmengen über die Lebensdauer des Ventils erheblich verändern.

Da der Ventilschließkörper 7 und das gewölbte Bodenteil 19 des Ventilsitzkörpers 16 mit unterschiedlichen Radien ausgeformt sind, liegt bei geschlossenem Brennstoffeinspritzventil innerhalb der ringförmig umlaufenden Ventilsitzfläche 22 im Bereich der Austrittsöffnungen 23 zwischen dem Ventilschließkörper 7 und dem Bodenteil 19 ein abgeschlossener Zwischenraum vor, der ein Totvolumen 25 darstellt. Erfindungsgemäß soll zur Vermeidung der Verkokungsanlagerungen an den Austrittsöffnungen 23 eine Gasspeicherung im Totvolumen 25 erfolgen. Bevor dieses Funktionsprinzip der Gasspeicherung beschrieben wird, soll im folgenden kurz das Entstehen von Verkokungsablagerungen erläutert werden.

Anhand von Figur 2, die eine Austrittsöffnung 23 schematisch zeigt, werden die Vorgänge der Durchströmung und der Verkokung nachfolgend erläutert. Wenn der Ventilschließkörper 7 am Ende des Einspritzvorgangs zurück an die Ventilsitzfläche 22 gedrückt wird, wird der Durchfluss durch die Austrittsöffnungen 23 abrupt gestoppt. Es fließt also kein Brennstoff mehr durch den Dichtsitzbereich an der Ventilsitzfläche 22 vorbei in das Totvolumen 25 nach.

Die unmittelbar vor dem Schließen des Ventils noch aus den Austrittsöffnungen 23 austretende Flüssigkeitssäule 27 besitzt aufgrund ihrer Masse eine gewisse Trägheit. Der infolge des Schließens des Ventils und des damit verbundenen Stops des Durchflusses im Dichtsitzbereich entstehende Unterdruck in der Flüssigkeitssäule 27 wird ausgehend von einer Austrittsebene 28 der Austrittsöffnung 23 in stromaufwärtiger Richtung innerhalb der Austrittsöffnung 23 trägheitsbedingt größer. An einer bestimmten Stelle 29 innerhalb der Flüssigkeitssäule 27 wird der Dampfdruck der Flüssigkeit unterschritten. An dieser Stelle 29 bildet sich schlagartig eine Dampfphase aus, wodurch der stromabwärtig dieser Stelle 29 gelegene Teil 30 der Flüssigkeitssäule 27 trägheitsgetrieben von der restlichen Flüssigkeit abreißt.

Es bildet sich innerhalb der Austrittsöffnung 23 ein Meniskus der Flüssigkeit aus, an dem eine Phasengrenze zwischen der Flüssigkeit und dem das Ventil umgebenden Gas vorliegt. Bei der Direkteinspritzung von Brennstoff direkt in einen Brennraum sind sämtliche Komponenten unmittelbar am Brennraum einer extremen Hitzeeinwirkung unterlegen, so auch ein Direkteinspritzventil, insbesondere die in den Brennraum ragenden Austrittsöffnungen 23. Während der Verbrennung können sich insbesondere an der oben erwähnten Phasengrenze Verkokungsrückstände bilden, die sich an der Wandung der Austrittsöffnung 23 anlagern und zu den bereits erläuterten zu überwindenden Nachteilen führen. So entstehen bei bekannten Ventilen in einer bestimmten Tiefe in den Austrittsöffnungen 23 ringförmige Verkokungsablagerungen, welche den Durchfluss nachteilig einschnüren.

Mit der erfindungsgemäßen Ausbildung des Brennstoffeinspritzventils werden die Austrittsöffnungen 23 vollständig entleert, weshalb sich innerhalb der Austrittsöffnungen 23 keine Verkokungsablagerungen bilden können. Erfindungsgemäß wird deshalb unmittelbar an einem das Totvolumen 25 begrenzenden Bauteil, hier entweder am Ventilschließkörper 7 oder am Ventilsitzkörper 16 eine Oberflächenbehandlung vorgenommen, mit der eine Rauheit der Oberfläche 33 zur Gasspeicherung geschaffen ist.

Wenigstens eine der das Totvolumen 25 begrenzenden Oberflächen 33 des stromabwärtigen Ventilnadelendes bzw. des Ventilschließkörpers 7 und des den stromabwärtigen Abspritzbereich aufweisenden Ventilsitzkörpers 16 weist eine poröse Struktur auf. Die poröse Oberfläche 33 wird z.B. durch Anrauen (Senkerodieren, Anätzen, Anschleifen mit grober Körnung, Einbringen von Drehriefen oder -rillen, Sandstrahlen, Beschießen mit Metallkügelchen u.ä.) oder durch Sintern des entsprechenden Bauteils erzeugt. Die Oberfläche 33 weist nach dieser Oberflächenbehandlung eine Oberflächenstruktur auf, bei der wenigstens einige Poren zur Gasspeicherung mit einer Rautiefe von mindestens 25 µm vorliegen.

In der aufgerauten Oberfläche 33 können kleinste Gasblasen in den einzelnen Poren festgehalten werden. Bei einem eventuell gesinterten Bauteil wird die Gasphase in den vielzähligen Hohlräumen der Materialstruktur, sogar in weiter von der unmittelbaren Oberfläche 33 entfernt liegenden Materialbereichen, gespeichert. Die in den Poren der aufgerauten Oberfläche 33 gespeicherten Gasbläschen sind sehr klein, so dass diese wegen ihrer hohen Oberflächenspannung und deshalb guten Adhäsion nicht vom Fluidstrom aus den Poren herausgespült werden können.

Beim Öffnen des Ventils durch Abheben des Ventilschließkörpers 7 von der Ventilsitzfläche 22 nimmt der Flüssigkeitsdruck im Totvolumen 25 zu, wodurch das Gasvolumen in den Poren der Oberfläche 33 komprimiert wird. Beim Schließen des Ventils nimmt der Flüssigkeitsdruck wieder ab, und das Gasvolumen dehnt sich innerhalb der Poren wieder aus. Da der Zufluss weiterer Flüssigkeit in das Totvolumen 25 bei geschlossenem Ventil unterbunden ist, entsteht durch die Trägheit der soeben noch austretenden Flüssigkeit ein Unterdruck in der Flüssigphase. Dadurch kann sich das Gasvolumen der Poren der Oberfläche 33 noch weiter ausdehnen, so dass es zum Teil in das Totvolumen 25 gelangt. Das auf diese Weise verdrängte Flüssigkeitsvolumen kann aus der Austrittsöffnung 23 ausströmen.

Während sich wieder ein Druckgleichgewicht im Totvolumen 25 einstellt, zieht sich das verbliebene Flüssigkeitsvolumen durch Kontraktion der Gasphase wieder aus den Austrittsöffnungen 23 in das Totvolumen 25 zurück. Die Austrittsöffnungen 23 füllen sich vollständig mit Brennraumgas. Die Flüssigkeitssäule ist aus den Austrittsöffnungen 23 vollständig verschwunden. Auf diese Weise existiert auch kein Meniskus der Flüssigkeitssäule 27 in der Austrittsöffnung 23 mehr, weshalb sich in der Austrittsöffnung 23 nun auch keine nachteilige ringförmige Verkokungsablagerung bilden kann.

Eine weitere Wirkungsweise der aufgerauten Oberfläche 33 besteht darin, dass die Gas speichernden Poren als Dampfbildungskeime fungieren. Bei dem oben beschriebenen Druckabfall im Brennstoff, der durch das Schließen des Ventils verursacht wird, bilden sich bei Unterschreitung des Dampfdrucks in den Poren Dampfblasen des Brennstoffs. Durch Anwachsen der Dampfblasen wird flüssiger Brennstoff aus dem Totvolumen 25 verdrängt. Nach Einstellen eines Druckgleichgewichts im Totvolumen 25 zieht sich das verbliebene Flüssigkeitsvolumen durch Kontraktion der Gasphase wieder aus den Austrittsöffnungen 23 in das Totvolumen 25 zurück.

Die Ventilnadelspitze bzw. der Ventilschließkörper 7 sind nicht ausschließlich die Bauteile des Brennstoffeinspritzventils, an denen die erfindungsgemäße Oberflächenrauheit vorgesehen sein kann. Vielmehr ist nur sicherzustellen, dass die die gewünschte Rauheit aufweisende Oberfläche 33 das Totvolumen 25 teilweise begrenzt.

## Patentansprüche

1. Brennstoffeinspritzventil, insbesondere direkt in einen Brennraum einer Brennkraftmaschine ragendes Brennstoffeinspritzventil, mit einem erregbaren Aktuator (10, 11, 12), mit einem durch den Aktuator (10, 11, 12) bewegbaren Ventilschließkörper (7), mit einem festen Ventilsitz (22), mit dem der Ventilschließkörper (7) zum Öffnen und Schließen des Ventils zusammenwirkt, mit einem in einem stromabwärtigen Abspritzbereich ausgebildeten Brennstoffauslass, der von wenigstens einer stromabwärts des Ventilsitzes (22) angeordneten Austrittsöffnung (23) gebildet ist, und mit einem stromabwärts des Ventilsitzes (22) und stromaufwärts des die wenigstens eine Austrittsöffnung (23) aufweisenden Abspritzbereichs gebildeten Totvolumen (25), **dadurch gekennzeichnet, dass** wenigstens eine Oberfläche (33) eines das Totvolumen (25) begrenzenden Bauteils eine Oberflächenstruktur mit direktem Zugang zu dem Totvolumen (25) aufweist, bei der wenigstens einige Poren zur Speicherung von Brennraumgas mit einer Rautiefe von mindestens 25 µm vorliegen.

2. Brennstoffeinspritzventil nach Anspruch 1, **dadurch gekennzeichnet, dass** die Oberfläche (33) porös ist.

3. Brennstoffeinspritzventil nach Anspruch 1 oder 2, **dadurch gekennzeichnet, dass** die Oberflächenstruktur der Oberfläche (33) mittels Senkerodieren angeraut ist.

4. Brennstoffeinspritzventil nach Anspruch 1 oder 2, **dadurch gekennzeichnet, dass** die Oberflächenstruktur der Oberfläche (33) mittels Anätzen angeraut ist.

5. Brennstoffeinspritzventil nach Anspruch 1 oder 2, **dadurch gekennzeichnet, dass** die Oberflächenstruktur der Oberfläche (33) mittels Anschleifen mit grober Körnung angeraut ist.

6. Brennstoffeinspritzventil nach Anspruch 1 oder 2, **dadurch gekennzeichnet, dass** die Oberflächenstruktur der Oberfläche (33) mittels Einbringen von Drehriefen oder -rillen angeraut ist.

7. Brennstoffeinspritzventil nach Anspruch 1 oder 2, **dadurch gekennzeichnet, dass** die Oberflächenstruktur der Oberfläche (33) mittels Sintern des die Oberfläche (33) aufweisenden Bauteils erzeugbar ist.

8. Brennstoffeinspritzventil nach einem der vorhergehenden Ansprüche, **dadurch gekennzeichnet, dass** an einem den Austrittsöffnungen (23) zugewandten stromabwärtigen Ventilnadelende bzw. am Ventilschließkörper (7) an dessen dem Totvolumen (25) zugewandter Oberfläche (33) die Oberflächenstruktur vorgesehen ist.

9. Brennstoffeinspritzventil nach einem der vorhergehenden Ansprüche, **dadurch gekennzeichnet, dass** die Gas speichernden Poren der Oberfläche (33) auch als Dampfbildungskeime dienen.

10. Fremdgezündete Brennkraft maschine mit einem Brennstoffeinspritzventil nach einem der vorhergehenden Ansprüche, wobei das Brennstoffeinspritzventil in den Brennraum der fremdgezündeten Brennkraftmaschine ragt.

11. Selbstgezündete Brennkraftmaschine mit einem Brennstoffeinspritzventil nach einem der Ansprüche 1 bis 9, wobei das Brennstoffeinspritzventil in den Brennraum der selbstzündenden Brennkraftmaschine ragt.

## Claims

1. Fuel injection valve, in particular a fuel injection valve which projects directly into a combustion chamber of an internal combustion engine, having an excitable actuator (10, 11, 12), having a valve closing body (7) which can be moved by the actuator (10, 11, 12), having a fixed valve seat (22) with which the valve closing body (7) interacts in order to open and close the valve, having a fuel outlet which is formed in a downstream ejection region by at least one outlet opening (23) which is arranged downstream of the valve seat (22), and having a dead volume (25) which is formed downstream of the valve seat (22) and upstream of the ejection region which has the at least outlet opening (23), **characterized in that** at least one surface (33) of a component which bounds the dead volume (25) has a surface structure with direct access to the dead volume (25), in which surface structure there are at least a number of pores for storing combustion chamber gas with a peak-to-valley height of at least 25 µm.

2. Fuel injection valve according to Claim 1, **characterized in that** the surface (33) is porous.

3. Fuel injection valve according to Claim 1 or 2, **characterized in that** the surface structure of the surface (33) is roughened by electric discharge machining.

4. Fuel injection valve according to Claim 1 or 2, **characterized in that** the surface structure of the surface (33) is roughened by etching.

5. Fuel injection valve according to Claim 1 or 2, **characterized in that** the surface structure of the surface (33) is roughened by coarse grinding.

6. Fuel injection valve according to Claim 1 or 2, **characterized in that** the surface structure of the surface (33) is roughened by providing rotational tool marks or grooves.

7. Fuel injection valve according to Claim 1 or 2, **characterized in that** the surface structure of the surface (33) can be produced by sintering the component having the surface (33).

8. Fuel injection valve according to one of the preceding claims, **characterized in that** the surface structure is provided on a downstream valve needle end facing the outlet openings (23) or on that surface (33) of the valve closing body (7) which faces the dead volume (25).

9. Fuel injection valve according to one of the preceding claims, **characterized in that** the pores in the surface (33) which store gas also serve as vapour formation promoting elements.

10. Spark-ignition internal combustion engine having a fuel injection valve according to one of the preceding claims, wherein the fuel injection valve projects into the combustion chamber of the spark-ignition internal combustion engine.

11. Auto-ignition internal combustion engine having a fuel injection valve according to one of Claims 1 to 9, wherein the fuel injection valve projects into the combustion chamber of the auto-ignition internal combustion engine.

## Revendications

1. Injecteur de carburant, en particulier injecteur de carburant engagé directement dans une chambre de combustion d'un moteur à combustion interne, comprenant un actionneur (10, 11, 12) pouvant être excité, un corps obturateur de soupape (7) pouvant être mis en mouvement par l'actionneur (10, 11, 12), un siège de soupape fixe (22) avec lequel le corps obturateur de soupape (7) coopère pour ouvrir et fermer la soupape, un échappement de carburant formé dans une zone de pulvérisation aval qui est formée par au moins une ouverture de sortie (23) disposée en amont du siège de soupape (22), et un volume mort (25) formé en aval du siège de soupape (22) et en amont de la zone de pulvérisation qui présente au moins une ouverture de sortie (23),
**caractérisé en ce qu'**
au moins une surface (33) d'une pièce délimitant le volume mort (25) présente une structure superficielle avec accès direct au volume mort (25), surface dans laquelle se trouvent au moins quelques pores ayant une profondeur de rugosité d'au moins 25 µm destinés à accumuler du gaz de la chambre de combustion,

2. Injecteur de carburant selon la revendication 1,
**caractérisé en ce que**
la surface (33) est poreuse.

3. Injecteur de carburant selon la revendication 1 ou 2,
**caractérisé en ce que**
la structure superficielle de la surface (33) est rendue rugueuse par érosion profonde.

4. Injecteur de carburant selon la revendication 1 ou 2,
**caractérisé en ce que**
la structure superficielle de la surface (33) est rendue rugueuse par gravure.

5. Injecteur de carburant selon la revendication 1 ou 2,
**caractérisé en ce que**
la structure superficielle de la surface (33) est rendue rugueuse par meulage à gros grain.

6. Injecteur de carburant selon la revendication 1 ou 2,
**caractérisé en ce que**
la structure superficielle de la surface (33) est rendue rugueuse par la formation de stries ou sillons au tour.

7. Injecteur de carburant selon la revendication 1 ou 2,
**caractérisé en ce que**
la structure superficielle de la surface (33) peut être rendue rugueuse par frittage de la pièce présentant la surface (33).

8. Injecteur de carburant selon une des revendications précédentes,
**caractérisé en ce que**
la structure superficielle est prévue à une extrémité aval de l'aiguille d'injecteur, dirigée vers les ouvertures de sortie (23), ou sur la surface (33) dirigée vers le volume mort (25) de l'obturateur de soupape (7).

9. Injecteur de carburant selon une des revendications précédentes,
**caractérisé en ce que**
les pores de la surface (33) qui accumulent du gaz servent aussi de germes de vaporisation.

10. Moteur à combustion interne à allumage commandé comprenant un injecteur de carburant selon une des revendications précédentes,
dans lequel
l'injecteur de carburant est engagé dans la chambre de combustion du moteur à combustion interne à allumage commandé.

11. Moteur à combustion interne à allumage spontané comprenant un
injecteur de carburant selon une des revendications 1 à 9,
dans lequel
l'injecteur de carburant est engagé dans la chambre de combustion du moteur à combustion interne à allumage spontané.
